# EUROPÄISCHE PATENTANMELDUNG

(11) **EP 0 816 770 A2**
(43) Veröffentlichungstag der Anmeldung: **07.01.1998**
(21) Anmeldenummer: 97110201.7
(22) Anmeldetag: 21.06.1997
(51) Int. Cl.: F24F 12/00

(54) **Auskleidungs-Rohreinsatz für den Einbau in Wanddurchbrüche**

(30) Priorität: 02.07.1996 DE 29611516 U
(71) Anmelder: SIEGENIA-FRANK KG, 57074 Siegen (DE)
(72) Erfinder: Kucharczyk, Eckhard, 57234 Wilnsdorf-Oberdielfen (DE)

(57) **Zusammenfassung**

Die Erfindung betrifft einen Auskleidungsrohransatz 7 für den Einbau in Wanddurchbrüche 6, welcher mit zwei einander benachbart liegenden Strömungskanälen 8 und 9 für den Zuluftstrom 4 und für den Abluftstrom 5 eines im Rauminneren angeordneten und einen Wärmerückgewinner 3 enthaltenden Zwangslüftungsgerätes 2 ausgestattet ist. Um die Rückwärmezufuhr in das Rauminnere zu verbessern, ist vorgesehen, daß die die Strömungskanäle 8 und 9 gegeneinander abgrenzenden Wandungen 10 des Rohreinsatzes 7 aus einem gut wärmeleitenden Werkstoff, insbesondere aus Metall, bestehen und als in Strömungsrichtung der Zuluft 4 wirksamer Zusatz- bzw. Vorwärmetauscher zum Zwangslüftungsgerät 2 vorgesehen sind.

## Beschreibung

Gegenstand der Erfindung ist ein Auskleidungs-Rohreinsatz für den Einbau in Wanddurchbrüche, welcher mit zwei einander benachbart liegenden Strömungskanälen für den Zuluft- und den Abluftstrom eines im Rauminneren angeordneten und einen Wärmerückgewinner enthaltenden Zwangslüftungsgerätes ausgestattet ist.

Die Erfindung zielt dabei darauf ab, ohne Notwendigkeit eines baulichen Mehraufwandes die Rückwärme-Zufuhr in das Rauminnere zu verbessern.

Es hat sich gezeigt, daß dieser Zweck leicht dadurch erfüllt werden kann, daß die die Strömungskanäle gegeneinander abgrenzenden Wandungen des Rohreinsatzes aus einem gut wärmeleitenden Werkstoff, insbesondere aus Metall bestehen und als in Zuluft-Strömungsrichtung wirkensamer Zusatz- bzw. Vorwärmetauscher zum Zwangslüftungsgerät vorgesehen sind.

Vorteilhaft ist ein solcher Auskleidungs-Rohreinsatz gekennzeichnet durch eine kreisförmige Umfangs- bzw. Mantelbegrenzung und dadurch, daß die aus gut wärmeleitenden Werkstoff bestehenden Wandungen als diametrale Wandungen vorgesehen sind.

Es bewährt sich auch, wenn mindestens die Wandungen aus gut wärmeleitenden Werkstoff mit dem Luftdurchlaß des Zwangslüftungsgerätes - z. B. nach dem Prinzip Nut und Feder in lösbaren Halteeingriff bringbar sind. Die aus dem gut wärmeleitenden Werkstoff bestehenden Wandungen können eine ihre Kontaktflächen vergrößernde Längsprofilierung aufweisen, die aus Zick-Zack-, Wellen -und/oder Sicken-Einformungen besteht. Sie kann aber auch durch beidseitig aus der Wandung vorspringende Verrippungen gebildet werden.

Wenn der Auskleidungs-Rohreinsatz in Querschnittsrichtung elastisch verformbar ausgeführt, beispielsweise als ein Kunststoff-Formteil hergestellt wird, dann ist in diesem der Zusatz bzw. Vorwärmetauscher besonders einfach, nämlich mit Klemmsitz und selbstzentrierend festlegbar.

Ein Längenteilstück der diametralen Wandung läßt sich gegebenenfalls auch als eine in ihrer Umrißform auf den lichten Gesamtquerschnitt des Rohreinsatzes abgestimmte Schwenkklappe ausbilden sowie im Rohreinsatz zwischen einer Fluchtlage zur diametralen Wandung und einer Querlage dazu verstellbar vorsehen. In diesem Fall kann dann der Zusatz- bzw. Vorwärmetauscher wahlweise auch als Umluft-Betriebsvorrichtung in Verbindung mit einem solchen Zwangslüftungsgerät genutzt werden, das normalerweise gleichzeitig der Förderung eines Zuluft- und eines Abluftstromes dienlich ist (vgl. beispielsweise die DE 38 28 011 C2).

Ausführungsbeispiele des Gegenstandes der Erfindung sind in der Zeichnung dargestellt. Es zeigt
- Fig. 1: in schematisch vereinfachter Längsschnittdarstellung einen in einen Wanddurchbruch eingesetzten Auskleidungs-Rohreinsatz von einfachster Bauart,
- Fig. 2: in einer der Fig. 1 entsprechenden Darstellung einen Auskeidungs-Rohreinsatz von etwas aufwendigerer Bauart zur Erfüllung einer Zusatzfunktion, während die
- Fig. 3 bis 7: jeweils im Querschnitt verschiedene Ausstattungsmöglichkeiten für als Zusatz-Vorwärmetauscher benutzbare Auskleidungs-Rohreinsätze wiedergeben.

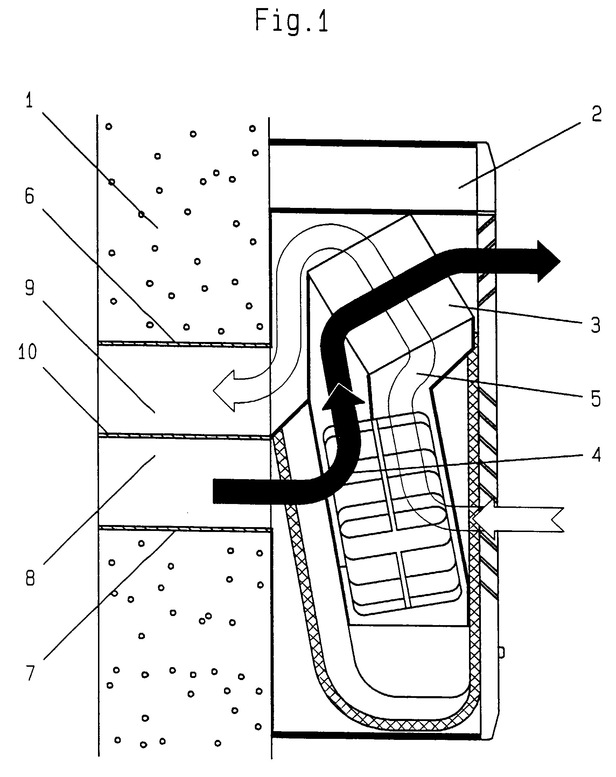

In Fig.1 der Zeichnung ist an der Innenseite einer Gebäudewand 1 ein Zwangslüftungsgerät 2 montiert, das mit einem Wärmerückgewinner 3, beispielsweise der rekuperativen Bauart, ausgestattet ist, welcher mit einem Zuluftstrom 4 und einem Abluftstrom 5 beaufschlagt wird. Zu diesem Zweck ist in die Gebäudewand 1 ein Durchbruch 6, z. B. als Bohrung, eingebracht, in den bzw. die wiederum axial ein Auskleidungs-Rohreinsatz 7 eingeschoben ist.

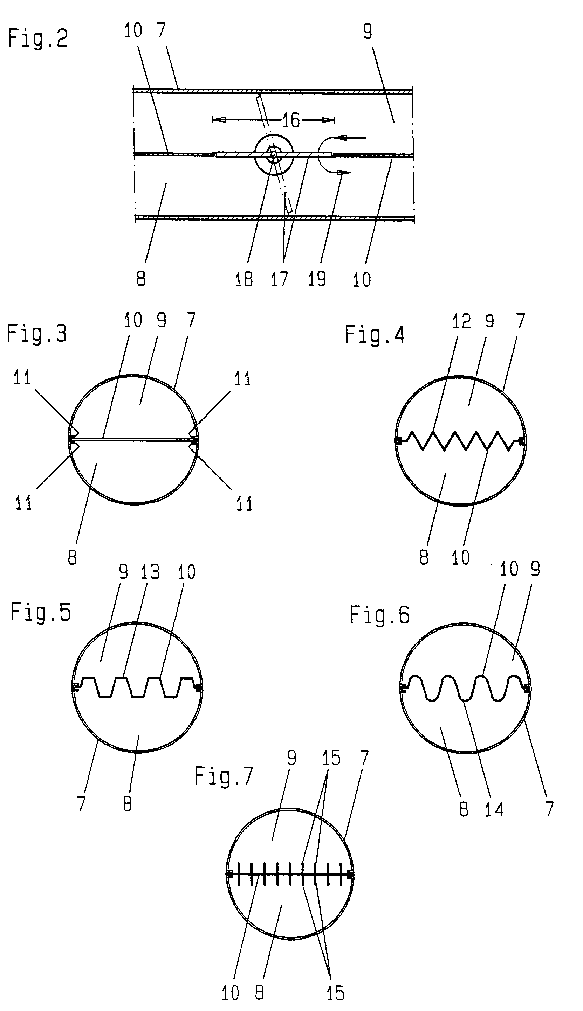

Der Auskleidungs-Rohreinsatz 7 hat vorzugsweise kreisrunden Querschnitt, wie das den Fig. 3 bis 7 entnehmbar ist. Er enthält zwei einander benachbart liegende Strömungskanäle 8 und 9, die durch eine gemeinsame Längswand 10 gegeneinander abgegrenzt sind.

Zumindest die Längswand 10 besteht dabei aus einem gut wärmeleitenden Werkstoff, insbesondere aus Metall, und ist mit diametraler Lage zum Querschnitt des Auskleidungs-Rohreinsatzes 7 eingebaut. Dadurch werden die beiden Strömungskanäle 8 und 9 mit etwa gleicher Querschnittsabmessung gegeneinander abgegrenzt.

Die Längswand 10 aus dem gut wärmeleitenden Werkstoff läßt sich besonders einfach und vorteilhaft mit dem Auskleidungs-Rohreinsatz 7 dadurch in Verbindung bringen, daß sie mit ihren Längsrändern nach Art von Nut und Feder zwischen parallele Längsstege 11 am Innenumfang des Auskleidungs-Rohreinsatz 7 eingeschoben wird, wie das die Fig. 3 bis 7 verdeutlichen.

Wenn der Auskleidungs-Rohreinsatz 7 aus Kunststoffmaterial besteht, lassen sich diese Längestege 11 unmittelbar durch den Extrusionsvorgang am Innenumfang anformen.

Wird der Auskleidungs-Rohreinsatz 7 in Querschnittsrichtung elastisch verformbar ausgeführt, dann besteht aber auch die Möglichkeit, die aus gut wärmeleitendem Werkstoff bestehende Längswand 11 einfach mit Klemmsitz und selbstzentrierend am Innenumfang des Auskleidungs-Rohreinsatzes festzulegen.

Im einfachsten Falle wird die Längswand 10 von einer ebenen Platte aus Blech gebildet. Zur Vergrößerung ihrer Kontaktflächen zum Zuluftstrom und zum Abluftstrom hin ist es jedoch auch möglich, die Längswand 10 mit besonderen Längsprofilierungen 12, 13, 14 und 15 auszustatten. Die ebene Bauform der Längswand 10 ist in Fig. 3 der Zeichnung zu sehen. Nach Fig. 4 weist die Längswand 10 hingegen ein Zick-Zack-Profil 12 auf. Nach Fig. 5 hat die Längswand 10 Trapezsicken 13, während sie gemäß Fig. 6 mit Wellen-Einformungen 14 versehen ist. In Fig. 7 ist schließlich noch zu sehen, daß die aus gut wärmeleitendem Werkstoff bestehende Längswand 10 auch beiseitig aus der Wandungsebene vorspringende Verrippungen 15 haben kann.

Die beschriebene Ausgestaltung des Auskleidungs-Rohreinsatzes 7 hat den Vorteil, daß sie auf einfache Art und Weise einen in Zuluft-Strömungsrichtung wirksamen Zusatz- bzw. Vorwärmetauscher zum Zwangslüftungsgerät 2 bildet und dadurch den Wärmerückführungs-Effekt des darin befindlichen Wärmerückgewinners 3 unterstützt.

In Fig. 2 ist - abweichend von Fig. 1 - ein Aukleidungs-Rohreinsatz 7 gezeigt, der nicht nur als in Zuluft-Strömungsrichtung wirksamer Zusatz- bzw. Vorwärmetauscher genutzt werden kann. Vielmehr hat dort die diametrale Längswand 10 eine Ausgestaltung, durch die sich der Rohreinsatz 7 bei Bedarf zusammen mit dem Zwangslüftungsgerät 2 als eine Umluft-Betriebsvorrichtung nutzen läßt. Zu diesem Zweck ist das mittlere Längenteilstück 16 der Längswand 10 als Schwenkklappe 17 ausgeführt, die sich um eine etwa auf gleicher Ebene mit der Längswand 10 gelegene Querachse 18 verschwenken läßt. Während die Schwenkklappe 17 in ihrer in Richtung der Längswand 10 ausgerichteten - mit vollausgezogenen Linien gezeichneten - Lage unmittelbar einen Teil der Längswand 10 bildet und wie diese als Zusatz-Vorwärmetauscherelement wirkt, kann sie zur gleichzeitigen Querschnitts-Absperrung des gesamten Auskleidungs-Rohreinsatzes 7 in die gestrichelt gezeichnete Querlage gestellt werden. In diesem Falle bildet sie dann eine Strömungsumlenkung 19 für den Luftstrom innerhalb des dem Zwangslüftungsgerätes 2 benachbarten Längenteilstücks des Auskleidungs-Rohreinsatzes 7. Dort wird der Abluftstrom 5 des Zwangslüftungsgerätes 2 aus dem Strömungskanal 9 um 180° in den Strömungskanal 8 umgelenkt und dem Zwangslüftungsgerät 2 unmittelbar wieder als Zuluftstrom 4 zugeführt. Das Zwangslüftungsgerät 2 wird damit im Umluft-Betrieb gefahren.

Als sinnvoll hat sich herausgestellt, die Schwenkklappe 17 durch Fernbedienung, beispielsweise über einen elektrischen Stellmotor zu betätigen. Zweckmäßig ist es auch, die Längswand 10 am inneren Ende 20 aus dem Auskleidungs-Rohreinsatz 7 um ein gewisses Maß herausragen zu lassen. Sie kann dadurch nach dem Prinzip Nut und Feder mit dem Luftdurchlaß des Zwangslüftungsgerätes 2 in lösbaren Halteeingriff gebracht werden.

### BEZUGSZEICHENLISTE

- 1: Gebäudewand
- 2: Zwangslüftungsgerät
- 3: Wärmerückgewinner
- 4: Zuluftstrom
- 5: Abluftstrom
- 6: Durchbruch
- 7: Aukleidungs-Rohreinsatz
- 8: Strömungskanal
- 9: Strömungskanal
- 10: Längswand
- 11: Längsstege
- 12: Zick-Zack-Profil
- 13: Trapezsicken
- 14: Welleneinformungen
- 15: Vorsprünge
- 16: Mittleres Längenteilstück
- 17: Schwenkklappe
- 18: Querachse
- 19: Strömungsumlenkung
- 20: Inneres Ende

## Patentansprüche

1. Auskleidungs-Rohreinsatz (7) für den Einbau in Wanddurchbrüche (6), welcher mit zwei einander benachbart liegenden Strömungskanälen (8 und 9) für den Zuluftstrom (4) und den Abluftstrom (5) eines im Rauminneren angeordneten und einen Wärmerückgewinner (3) enthaltenden Zwangslüftungsgerätes (2) ausgestattet ist,
dadurch gekennzeichnet,
daß die die Strömungskanäle (8 und 9) gegeneinander abgrenzenden Wandungen (10) des Rohreinsatzes (7) aus einem gut wärmeleitenden Werkstoff, insbesondere aus Metall, bestehen
und als in Strömungsrichtung der Zuluft (4) wirksamer Zusatz- bzw. Vorwärmetauscher zum Zwangslüftungsgerät (2) vorgesehen sind.

2. Auskleidungs-Rohreinsatz nach einem der Ansprüche 1 und 2,
gekennzeichnet
durch eine kreisförmige Umfangs- bzw. Mantelbegrenzung und dadurch,
daß die aus gut wärmeleitendem Werkstoff bestehenden Wandungen (10)im Rohreinsatz (7) als diametrale Wandungen vorgesehen sind (Fig. 3 bis 7).

3. Auskleidungs-Rohreinsatz nach einem der Ansprüche 1 und 2,
dadurch gekennzeichnet,
daß mindestens die Wandungen (10) aus gut wämreleitendem Werkstoff mit dem Luftdurchlaß des Zwangslüftungsgerätes (2), z. B. nach dem Prinzip Nut und Feder - in lösbaren Halteeingriff bringbar sind.

4. Auskleidungs-Rohreinsatz nach einem der Ansprüche 1 bis 3,
dadurch gekennzeichnet,
daß die aus gut wärmeleitendem Werkstoff bestehenden Wandungen (10) eine ihre Kontaktflächen vergrößernde Längsprofilierung (12 bis 15) aufweisen.

5. Auskleidungs-Rohreinsatz nach einem der Ansprüche 1 bis 4,
dadurch gekennzeichnet,
daß die Längsprofilierungen (12, 13, 14) aus Zick-Zack-, Wellen- und/oder Sicken-Einformungen bestehen (Fig. 4 bis 6).

6. Auskleidungs-Rohreinsatz nach einem der Ansprüche 1 bis 4,
dadurch gekennzeichnet,
daß die Längsprofilierungen durch beidseitig aus der Wandung (10) vorspringende Verrippungen (15) gebildet sind.

7. Auskleidungs-Rohreinsatz nach einem der Ansprüche 1 bis 6,
dadurch gekennzeichnet,
daß er in Querschnittsrichtung eleastisch verformbar ausgeführt, beispielsweise als ein Kunststoff-Formteil hergestellt, und in diesem der Zusatz- bzw. Vorwärmetauscher (Längswand 10) mit Klemmsitz und selbstzentrierend festlegbar ist.

8. Auskleidungs-Rohreinsatz nach einem der Ansprüche 1 bis 7,
dadurch gekennzeichnet,
daß ein Längsteilstück (16) der diametralen Wandung (10) als eine in ihrer Umrißform auf den lichten Gesamtquerschnitt des Rohreinsatzes (7) abgestimmte Schwenkklappe (17) ausgebildet sowie im Rohreinsatz (7) zwischen einer Fluchtlage zur diametralen Wandung (10) und einer Querlage dazu verstellbar ist (Fig. 2).
